# FASCICULE DE BREVET EUROPEEN

(11) **EP 1 591 293 B1**
(45) Date de publication et mention de la délivrance du brevet: **14.03.2007**
(21) Numéro de dépôt: 05290787.0
(22) Date de dépôt: 08.04.2005
(51) Int. Cl.: B60K 11/04, B60K 13/06

(54) **Bloc avant de véhicule automobile et véhicule comportant un tel bloc avant**
Frontmodul für ein Kraftfahrzeug und Fahrzeug mit einem solchen Modul.
Front module for motor vehicle and vehicle equipped with such a module.

(30) Priorité: 29.04.2004 FR 0404572
(43) Date de publication de la demande: 02.11.2005
(73) Titulaire: Peugeot Citroën Automobiles S.A., 78140 Vélizy Villacoublay (FR)
(72) Inventeur: Coppin, Olivier, 77700 Chessy (FR)
(74) Mandataire: Habasque, Etienne J. Jean-François

(56) Documents cités:
- DE-A- 19 756 731
- US-A- 4 610 326
- PATENT ABSTRACTS OF JAPAN vol. 1996, no. 06, 28 juin 1996 (1996-06-28) & JP 08 040087 A (AICHI MACH IND CO LTD), 13 février 1996 (1996-02-13)

## Description

La présente invention concerne un bloc avant de véhicule automobile, ainsi que le véhicule muni d'un tel bloc avant. Un tel bloc avant est divulgé dans la DE-A-19756731.

L'invention vise plus spécifiquement les véhicules dont les blocs avant comprennent un groupe moto-propulseur du véhicule, supporté mécaniquement par un berceau rigide, solidaire ou intégré au châssis global du véhicule. Dans un tel bloc avant, la position relative des éléments situés sous le capot qui recouvre le groupe moteur conditionne la dimension longitudinale du bloc avant, ainsi que la valeur du porte-à-faux avant, c'est-à-dire le couple de basculement vers l'avant subi par le véhicule autour de l'axe de rotation des roues avant.

Par ailleurs, l'émergence de préoccupations pour protéger les piétons en cas de choc frontal avec un véhicule et pour limiter les dommages mécaniques en cas de choc frontal entre deux véhicules a conduit à prolonger vers l'avant et à renforcer le berceau de support du moteur, tout en dégageant de tout élément rigide une partie de l'espace au-dessus de ce prolongement du berceau. Cet espace libre implique cependant généralement une perte de volume utilisable pour l'implantation d'éléments mécaniques et une augmentation de la dimension longitudinale du bloc avant, ce qui limite les possibilités de conception et d'esthétisme du bloc avant.

Le but de la présente invention est de proposer un bloc avant dans lequel le positionnement de ses éléments réduit la valeur du porte-à-faux, tout en garantissant, voire améliorant, la protection en cas de choc.

A cet effet, l'invention a pour objet un bloc avant d'un véhicule automobile, comportant un groupe moto-propulseur, un berceau de support du groupe moto-propulseur et un organe de refroidissement du groupe moto-propulseur adapté pour évacuer de la chaleur lorsqu'il est balayé par un courant d'air, caractérisé en ce que l'organe de refroidissement est disposé en arrière, par rapport au sens normal de déplacement du véhicule, du groupe moto-propulseur et en ce que le berceau inclut au moins un corps creux rigide apte à canaliser de l'air de l'avant du groupe moto-propulseur vers l'organe de refroidissement.

Dans un bloc avant selon l'invention, on utilise au moins certains des corps creux rigides du berceau, qui supportent le bloc moteur, pour canaliser de l'air extérieur en direction de l'organe de refroidissement du groupe moteur, disposé à l'arrière de ce groupe moteur. Cette combinaison de fonctions mécaniques et de refroidissement pour le berceau du bloc avant permet une nouvelle disposition générale des éléments de ce bloc avant.

D'autres caractéristiques de ce bloc avant, prises isolément ou selon toutes les combinaisons techniquement possibles, sont énoncées aux revendications dépendantes 2 à 8.

L'invention a également pour objet un véhicule automobile comportant un bloc avant tel que défini ci-dessus.

L'invention sera mieux comprise à la lecture de la description qui va suivre, donnée uniquement à titre d'exemple et faite en se référant aux dessins sur lesquels :
- la figure 1 est une vue schématique d'un bloc avant d'un véhicule automobile selon l'art antérieur ;
- la figure 2 est une vue analogue à la figure 1 d'un bloc avant d'un véhicule automobile selon l'invention ;
- la figure 3 est une vue schématique en élévation d'un berceau d'une variante de bloc avant selon l'invention ; et
- la figure 4 est une coupe prise suivant le plan IV-IV indiqué à la figure 3.

Par commodité, dans toute la suite, les termes « avant » et « arrière » sont définis par rapport au sens normal de déplacement du véhicule automobile considéré. De même, le terme « inférieur » désigne une direction orientée vers le sol sur lequel repose le véhicule, le terme « supérieur » désignant la direction de sens opposé.

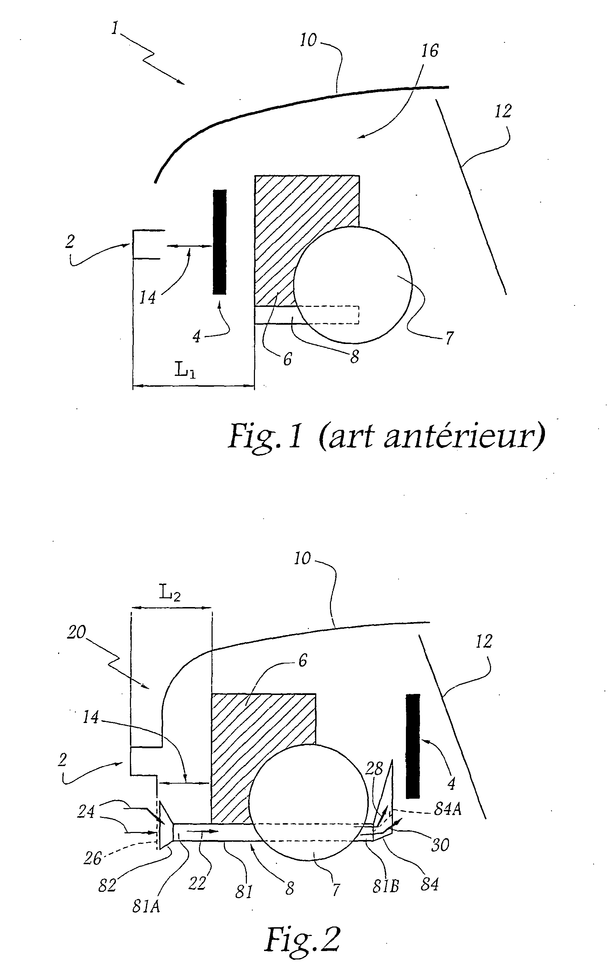

Sur la figure 1 est représenté un bloc avant 1 d'un véhicule automobile selon l'art antérieur. Ce bloc avant comporte essentiellement, depuis son extrémité avant vers l'arrière du véhicule, un pare-chocs 2, un radiateur 4 et un groupe moto-propulseur 6. Le radiateur 4 est adapté pour refroidir le groupe moteur 6, en évacuant de la chaleur issue de ce dernier lorsque le radiateur est balayé par un courant d'air provenant essentiellement de l'extérieur du véhicule. Le groupe moteur 6 est, d'une part, relié à une paire de roues 7 disposées de chaque côté du véhicule et formant le train avant et, d'autre part, supporté mécaniquement par un berceau rigide 8 solidaire ou intégré au châssis global du véhicule.

Le pare-chocs 2, le radiateur 4 et le groupe moteur 6 sont situés sous un capot 10 à même d'être déplacé pour accéder par le haut aux éléments précités.

Le bloc avant 1 est séparé d'un habitacle non représenté du véhicule, situé en arrière de ce bloc avant, par un tablier 12.

Entre le pare-chocs avant 2 et le radiateur 4 est située une zone 14 dite de réparabilité, figurée par une double flèche. Cette zone est adaptée pour absorber des chocs de faible intensité, typiquement les chocs qui surviennent en zone urbaine, pour des vitesses de choc inférieures à environ 15 km/heure. Cette zone 14 est généralement équipée de poutres déformables suivant la longueur du véhicule, à même d'absorber l'énergie des chocs.

On notera que la dimension longitudinale L₁ de la partie du bloc 1 située en avant du groupe moteur 6 est imposée par les longueurs successives du pare-chocs 2, de la zone de réparabilité 14 et du radiateur 4. La valeur du porte-à-faux qui s'exerce sur le véhicule autour du train avant est directement liée à cette dimension longitudinale L₁.

Sur la figure 2 est représenté un bloc avant 20 d'un véhicule automobile selon l'invention. Ce bloc avant 20 comprend essentiellement les mêmes éléments que le bloc avant 1, c'est-à-dire un pare-chocs avant 2, un radiateur 4, un groupe moto-propulseur 6 à même d'entraîner des roues avant 7 et supporté par un berceau rigide 8, un capot 10 et une zone de réparabilité 14. Il est séparé de l'habitacle du véhicule par un tablier 12.

Le bloc avant 20 se distingue du bloc avant 1 relevant de l'art antérieur par, d'une part, la disposition relative des éléments précités et, d'autre part, l'existence d'aménagements relatifs au berceau 8 en vue d'acheminer de l'air de l'extérieur à l'intérieur du bloc avant.

Plus précisément, le radiateur 4 est disposé en arrière du groupe moteur 6. De plus, pour acheminer de l'air depuis la face frontale avant du bloc avant 20 jusqu'au radiateur 4, le berceau 8 est conformé de façon à ce qu'au moins certains de ses constituants qui s'étendent globalement suivant la longueur du bloc avant se présentent sous la forme de corps creux rigides 81 aptes à canaliser intérieurement de l'air suivant la direction longitudinale du bloc avant, comme indiqué par la flèche 22. Ces corps creux longitudinaux 81 sont par exemple des poutres métalliques creuses, notamment de section transversale rectangulaire, et constituent de préférence des longerons de support du groupe moteur 6.

Le corps creux 81 du berceau 8 représenté à la figure 2 est dimensionné en longueur de sorte que sa partie d'extrémité avant 81A s'étende en avant du groupe moteur 6 tandis que sa partie d'extrémité arrière 81 B s'étend en arrière de ce groupe moteur.

La partie d'extrémité avant 81A est avantageusement équipée de moyens d'absorption de chocs frontaux et/ou présente une structure apte à absorber l'énergie de tels chocs, par exemple par déformation. De la sorte, la zone de réparabilité 14, dans laquelle s'étend la partie 81A, n'est pas nécessairement équipée de poutres déformables supplémentaires.

A l'extrémité avant de la partie 81A, le corps creux 81 de canalisation d'air est équipé d'une bouche 82 de captage d'air depuis l'extérieur, disposée en arrière du pare-chocs avant 2 et, de préférence, au niveau de la zone de réparabilité 14. Cette bouche 82 est apte à collecter une grande quantité d'air, comme indiqué par les flèches 24. Elle est par exemple disposée dans le prolongement arrière d'une calandre ajourée 26 fixée à la partie frontale avant du bloc 20, en dessous du pare-chocs 2.

A l'extrémité arrière de sa partie d'extrémité arrière 81B, le corps creux 81 de canalisation d'air est équipé d'un diffuseur d'air 84, sous la forme d'un pavillon. Ce diffuseur est adapté pour répartir l'air en sortie du corps creux 81 sur, d'une part, la surface d'échange calorifique du radiateur 4, comme indiqué par la flèche 28 et, d'autre part, sur d'autres éléments arrière du bloc avant 20, comme indiqué par la flèche 30. Le diffuseur 84 est équipé à cet effet d'une paroi 84A de répartition de l'air sortant.

En fonctionnement, c'est-à-dire lorsque le véhicule se déplace vers l'avant, de l'air pénètre dans le ou les corps creux 81 de canalisation d'air par la bouche 82 (flèches 24), est guidé par ce ou ces corps 81 (flèche 22) et est diffusé par le diffuseur 84 jusqu'au radiateur 4 (flèche 28), ce dernier assurant le refroidissement du groupe moto-propulseur 6. De l'air provenant de l'extérieur est également envoyé par le diffuseur 84 dans le reste de la partie arrière du bloc avant 20 (flèche 30), ce qui évite l'accumulation de chaleur dans la zone arrière du bloc avant. Les éléments du bloc avant situés dans cette zone sont ainsi ventilés par de l'air frais, réduisant ainsi les risques d'endommagement de ces éléments, en particulier lorsqu'ils intègrent des circuits électriques ou électroniques, comme par exemple dans les dispositifs motorisés d'assistance de direction.

En cas de choc frontal du bloc avant 20, le pare-chocs 2 et la partie d'extrémité avant 81A absorbent au moins une partie de l'énergie de l'impact.

Le bloc avant selon l'invention permet de réduire la dimension longitudinale L₂ de la partie du véhicule située en avant du groupe moteur 6. En effet, comme indiqué sur la figure 2, cette dimension longitudinale L₂ est essentiellement imposée par la longueur du pare-chocs avant 2 et de la zone de réparabilité 14. La valeur du porte-à-faux avant du véhicule équipé du bloc avant 20 est donc réduite par rapport à celle du porte-à-faux pour le véhicule muni du bloc avant 1.

De plus, la position plus avancée du train avant et de l'ensemble du groupe moto-propulseur 6 conduit à une augmentation de l'empattement, c'est-à-dire de la distance séparant les trains de roues avant et arrière du véhicule, et à une meilleure répartition des masses entre l'avant et l'arrière du véhicule, ce qui favorise la tenue de route et le comportement routier du véhicule.

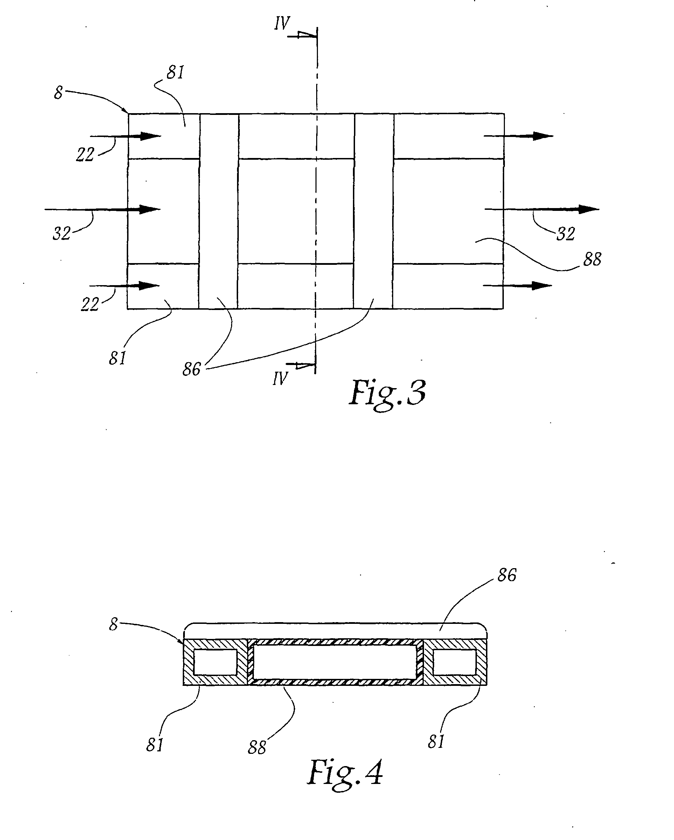

Sur les figures 3 et 4 est représentée une variante selon l'invention du berceau 8. De manière analogue au berceau de la figure 2, le berceau 8 de la figure 3 comporte deux longerons latéraux 81 constituant deux corps creux rigides de canalisation d'air vers l'arrière du bloc avant. Ces longerons sont reliés rigidement l'un à l'autre par deux traverses métalliques 86 qui s'étendent perpendiculairement aux longerons et qui sont solidarisées à leurs extrémités aux faces supérieures des longerons, par exemple par soudage.

Suivant la variante des figures 3 et 4, l'espace libre entre les longerons 81 est occupé par une gaine rigide 88 qui s'étend en longueur parallèlement aux longerons 81. Cette gaine est fixée aux longerons et/ou aux traverses 86. De la même façon que les longerons, la gaine 88 est ouverte à ses extrémités avant et arrière. Elle permet ainsi de canaliser de l'air depuis l'avant du bloc avant 20 vers l'arrière de ce bloc, comme indiqué par les flèches 32, augmentant ainsi la section d'acheminement d'air dans la partie arrière du bloc avant.

En coupe transversale, l'épaisseur des parois de la gaine 88 est inférieure à celle des parois des longerons 81 puisque, à la différence des longerons, la gaine n'a pas à assurer, en plus de l'acheminement d'air, le support mécanique du groupe moteur 6.

La gaine 88 présente en outre l'avantage d'occuper une zone du berceau 8 traditionnellement libre, entre le groupe moto-propulseur 6 et la garde au sol du véhicule.

Divers aménagements et variantes aux blocs avant décrits ci-dessus sont en outre envisageables. A titre d'exemple, un ventilateur ou analogue peut être prévu à l'entrée et/ou à la sortie des corps creux 81 de canalisation d'air, en vue de forcer l'admission d'air.

## Revendications

1. Bloc avant (20) de véhicule automobile, comportant un groupe moto-propulseur (6), un berceau (8) de support du groupe moto-propulseur et un organe (4) de refroidissement du groupe moto-propulseur adapté pour évacuer de la chaleur lorsqu'il est balayé par un courant d'air, **caractérisé en ce que** l'organe de refroidissement (4) est disposé en arrière, par rapport au sens normal de déplacement du véhicule, du groupe moto-propulseur (6) et **en ce que** le berceau (8) inclut au moins un corps creux rigide (81) apte à canaliser de l'air de l'avant du groupe moto-propulseur vers l'organe de refroidissment.

2. Bloc avant suivant la revendication 1, **caractérisé en ce que** le corps creux (81) de canalisation d'air s'étend en longueur globalement suivant le sens normal de déplacement du véhicule et **en ce que** le groupe moto-propulseur (6) est situé entre les extrémités avant (81 A) et arrière (81 B) de ce corps creux (81).

3. Bloc avant suivant la revendication 2, **caractérisé en ce que** la partie (81 A) du corps creux (81) de canalisation d'air située en avant du groupe moto-propulseur (6) constitue et/ou porte des moyens d'absorption de chocs frontaux.

4. Bloc avant suivant l'une des revendications 2 ou 3, **caractérisé en ce qu**'il comporte un pare-chocs avant (2) et une zone de réparabilité (14) interposée entre le pare-chocs et le groupe moto-propulseur (6) et en ce que l'extrémité avant (81A) du corps creux (81) de canalisation d'air ou des moyens de captage d'air (82) rapportés à cette extrémité avant (81A) débouchent au niveau de la zone de réparabilité (14).

5. Bloc avant suivant l'une quelconque des revendications 2 à 4, **caractérisé en ce que** l'extrémité arrière (81 B) du corps creux (81) de canalisation d'air est munie de premiers moyens (84) de diffusion de l'air en sortie du corps creux, sur l'organe de refroidissement (4).

6. Bloc avant suivant la revendication 5, **caractérisé en ce que** l'extrémité arrière (81 B) du corps creux (81) de canalisation d'air est munie de seconds moyens (84) de diffusion de l'air en sortie du corps creux, sur des éléments du bloc avant (20) disposés en arrière du groupe moto-propulseur (6), autres que l'organe de refroidissement (4).

7. Bloc avant suivant l'une quelconque des revendications précédentes, **caractérisé en ce qu**'il comporte en outre au moins une gaine rigide (88) de canalisation d'air, globalement parallèle au corps creux (81) de canalisation d'air.

8. Bloc avant suivant la revendication 7, **caractérisé en ce que** le berceau (8) inclut deux corps creux rigides (81) de canalisation d'air, qui forment deux longerons de support du groupe moto-propulseur (6), espacés l'un de l'autre suivant une direction transversale à la direction de déplacement du véhicule, la gaine de canalisation d'air (88) étant agencée entre ces deux longerons (81).

9. Véhicule automobile, **caractérisé en ce qu**'il comporte un bloc avant (20) selon l'une quelconque des revendications précédentes.

## Claims

1. Front end (20) of an automotive vehicle which includes a power plant (6), a cradle (8) for supporting the power plant and a device (4) for cooling the power plant suitable for removing heat when it is swept by a current of air, **characterised by** the fact that the cooling device (4) is located to the rear, in relation to the normal direction of motion of the vehicle, of the power plant (6) and by the fact that the cradle (8) includes at least one hollow rigid body (81) suitable for channelling air from the front of the power plant towards the cooling device.

2. Front end according to claim 1, **characterised by** the fact that the hollow body (81) for channelling air extends overall along the normal direction of motion of the vehicle and by the fact that the power-plant (6) is located between the front (81A) and rear (81B) ends of this hollow body (81).

3. Front end according to claim 2, **characterised by** the fact that the part (81A) of the hollow body (81) for channelling air that is located in front of the power plant (6) is made up of and/or carries means for absorbing frontal impacts.

4. Front end as described in any of claims 2 or 3, **characterised by** the fact that it includes a front bumper (2) and a repairability zone (14) located between the front bumper and the power unit (6), and by the fact that the front end (81A) of the hollow body (81) for channelling air or means for trapping air (82) added onto this front end (81A) open out in the said repairability zone (14).

5. Front end according to any of claims 2 to 4, **characterised by** the fact that the rear end (81B) of the hollow body (81) for channelling air is fitted with a first means (84) of diffusing air at the outlet from the hollow body, onto the cooling device (4).

6. Front end according to claim 5, **characterised by** the fact that the rear end (81B) of hollow body (81) for channelling air is fitted with a second means (84) of diffusing air at the outlet from the hollow body, onto elements of the front end (20) arranged behind the power plant (6), other than the cooling device (4).

7. Front end according to any of the preceding claims, **characterised by** the fact that it includes in addition at least one rigid duct (88) for channelling air which is, overall, parallel to the hollow body (81) for channelling air.

8. Front end according to claim 7, **characterised by** the fact that the cradle (8) includes two hollow rigid bodies (81) for channelling air, which form two support rails for the power unit (6), spaced apart along a direction which is transverse to the direction of motion of the vehicle, with the air channelling duct (88) being installed between these two rails (81).

9. Automotive vehicle, **characterised by** the fact that it includes a front end (20) according to any of the preceding claims.

## Patentansprüche

1. Frontendmodul (20) eines Kraftfahrzeugs, das einen Motorkompressor (6), eine Trägerhalterung (8) des Motorkompressors und ein Organ (4) zur Kühlung des Motorkompressors-aufweist, das ausgelegt ist, um Wärme abzuführen, wenn es von einem Luftstrom überstrichen wird, **dadurch gekennzeichnet, dass** das Kühlorgan (4) bezüglich der normalen Bewegungsrichtung des Fahrzeugs hinter dem Motorkompressor (6) angeordnet ist, und dass die Halterung (8) mindestens einen steifen Hohlkörper (81) umfasst, der in der Lage ist, Luft von vor dem Motorkompressor zum Kühlorgan zu kanalisieren.

2. Frontendmodul nach Anspruch 1, **dadurch gekennzeichnet, dass** der luftkanalisierende Hohlkörper (81) sich in der Länge im wesentlichen gemäß der normalen Bewegungsrichtung des Fahrzeugs erstreckt, und dass der Motorkompressor (6) sich zwischen-dem vorderen Ende (81A) und dem hinteren Ende (81B) dieses Hohlkörpers (81) befindet.

3. Frontendmodul nach Anspruch 2, **dadurch gekennzeichnet, dass** der Bereich (81A) des luftkanalisierenden Hohlkörpers (81), der sich vor dem Motorkompressor (6) befindet, Mittel zur Absorption eines Frontaufpralls bildet und/oder trägt.

4. Frontendmodul nach einem der Ansprüche 2 oder 3, **dadurch gekennzeichnet, dass** es eine vordere Stoßstange (2) und eine Instandsetzbarkeitszone (14) aufweist, die zwischen die Stoßstange und den Motorkompressor (6) eingefügt ist, und dass das vordere Ende (81A) des luftkanalisierenden Hohlkörpers (81) oder an dieses vordere Ende (81A) angesetzte Luftaufnahmemittel (82) in Höhe der Instandsetzbarkeitszone (14) münden.

5. Frontendmodul nach einem der Ansprüche 2 bis 4, **dadurch gekennzeichnet, dass** das hintere Ende (81B) des Luftkanal-Hohlkörpers (81) mit ersten Mitteln (84) zur Verteilung der Luft am Ausgang des Hohlkörpers auf das Kühlorgan (4) versehen ist.

6. Frontendmodul nach Anspruch 5, **dadurch gekennzeichnet, dass** das hintere Ende (81B) des luftkanalisierenden Hohlkörpers (81) mit zweiten Mitteln (84) zur Verteilung der Luft am Ausgang des Hohlkörpers auf andere Elemente des Frontendmoduls (20) als das Kühlorgan (4) versehen ist, die hinter dem Motorkompressor (6) angeordnet sind.

7. Frontendmodul nach einem der vorhergehenden Ansprüche, **dadurch gekennzeichnet, dass** es außerdem mindestens eine steife luftkanalisierende Hülle (88) aufweist, die im wesentlichen parallel zum luftkanalisierenden Hohlkörper (81) ist.

8. Frontendmodul nach Anspruch 7, **dadurch gekennzeichnet, dass** die Halterung (8) zwei steife luftkanalisierende Hohlkörper (81) aufweist, die zwei Längsträger des Motorkompressors (6) bilden, die gemäß einer Querrichtung zur Bewegungsrichtung des Fahrzeugs zueinander beabstandet sind, wobei die luftkanalisierende Hülle (88) zwischen diesen beiden Längsträgern (81) angeordnet ist.

9. Kraftfahrzeug, **dadurch gekennzeichnet, dass** es ein Frontendmodul (20) nach einem der vorhergehenden Ansprüche aufweist.
